# FASCICULE DE BREVET EUROPEEN

(11) **EP 3 774 400 B1**
(45) Date de publication et mention de la délivrance du brevet: **18.05.2022**
(21) Numéro de dépôt: 19719348.5
(22) Date de dépôt: 27.03.2019
(51) Int. Cl.: B60C 19/00, B60C 23/04

(54) **TRANSPONDEUR RADIOFREQUENCE POUR PNEUMATIQUE**
FUNKTRANSPONDER FÜR EINEN REIFEN
RADIO FREQUENCY TRANSPONDER FOR A TIRE

(30) Priorité: 30.03.2018 FR 1852839
(43) Date de publication de la demande: 17.02.2021
(73) Titulaire: COMPAGNIE GENERALE DES ETABLISSEMENTS MICHELIN, 63000 Clermont-Ferrand (FR)
(72) Inventeur: DESTRAVES, Julien, 63040 CLERMONT-FERRAND Cedex 9 (FR); CARO, Thomas, 63040 CLERMONT-FERRAND Cedex 9 (FR); CLERGEAT, Jean-Mathieu, 63040 CLERMONT-FERRAND Cedex 9 (FR); COUTURIER, Laurent, 63040 CLERMONT-FERRAND Cedex 9 (FR); PORTIER, Guillaume, 63040 CLERMONT-FERRAND Cedex 9 (FR)
(74) Mandataire: Roussy, Delphine
(86) Numéro de dépôt international: PCT/FR2019/050708
(87) Numéro de publication internationale: WO 2019/186068

(56) Documents cités:
- EP-A1- 0 505 905
- WO-A1-2009/134243
- WO-A1-2016/193457
- WO-A1-2017/046245
- DE-A1- 10 300 160

## Description

### Domaine de l'invention

La présente invention concerne un dispositif électronique de radio identification ou transpondeur radio fréquence apte à être fixé sur un objet à identifier subissant, en particulier en service, de fortes sollicitations thermo mécaniques comme un pneumatique.

### Arrière-plan technologique

Pour le domaine des dispositifs d'identification RFID (acronyme de Radio Frequency Identification), des transpondeurs radiofréquences passifs sont classiquement utilisés pour l'identification, le suivi et la gestion d'objets. Ces dispositifs permettent une gestion automatisée plus fiable et plus rapide.

Ces transpondeurs à identification radiofréquences passifs sont constitués généralement d'au moins une puce électronique et une antenne formée par une boucle magnétique ou une antenne rayonnante que l'on fixe à l'objet à identifier.

La performance de communication du transpondeur radiofréquence s'exprime par la distance maximale de communication du transpondeur radiofréquence avec un lecteur radiofréquence pour un même signal communiqué au ou par le lecteur radiofréquence.

Dans le cas des produits fortement extensibles comme par exemple les pneumatiques, un besoin existe d'identifier le produit tout au long de son existence depuis sa fabrication jusqu'à son retrait du marché et, en particulier, lors de son usage. Ensuite, afin de faciliter cette tâche, notamment en condition d'usage, une performance de communication élevée est requise qui s'exprime par la possibilité d'interroger le transpondeur radiofréquence à longue distance du produit, plusieurs mètres, par l'intermédiaire d'un lecteur radiofréquence. Enfin, on souhaite que le coût de fabrication d'un tel dispositif soit le plus compétitif possible.

On connait dans l'état de la technique, notamment d'après le document WO 2016/193457A1, un transpondeur à identification radiofréquence passif apte à répondre aux besoins des pneumatiques. Ce transpondeur est constitué d'une puce électronique, connectée à un circuit imprimé sur lequel est électriquement connectée une première antenne primaire. Cette antenne primaire est couplée électromagnétiquement à un ressort hélicoïdal mono brin constituant une antenne rayonnante dipôle. La communication avec un lecteur externe radio fréquence utilise par exemple les ondes radioélectriques et en particulier la bande UHF, acronyme d'Ultra Hautes Fréquences. En conséquence, les caractéristiques du ressort hélicoïdal sont ajustées à la fréquence de communication choisie. Ainsi la disparition de jonction mécanique entre le circuit imprimé et l'antenne rayonnante améliore la tenue mécanique du transpondeur radiofréquence.

Cependant, un tel transpondeur radiofréquence présente des faiblesses. Bien que ce transpondeur radiofréquence soit adapté pour fonctionner à la fréquence de communication du lecteur externe radiofréquence, la communication radiofréquence par l'intermédiaire de l'antenne rayonnante n'est pas optimale en particulier pour des interrogations à longue distance. De surcroît, il faut aussi tenir compte aussi de la tenue mécanique de l'antenne rayonnante dans un environnement fortement sollicitant thermomécaniquement. Ainsi, il faut optimiser le compromis de performances entre la tenue mécanique de l'antenne et son efficacité de radiocommunication afin d'optimiser les performances potentielles d'un tel transpondeur radiofréquence.

La présente invention porte sur un transpondeur radiofréquence visant à améliorer le compromis de performances, et en particulier la performance radioélectrique des transpondeurs radiofréquences employés entre autres dans l'industrie du pneumatique.

### Description de l'invention

L'invention porte sur un transpondeur radiofréquence passif destiné à être intégré à un objet à identifier constitué d'un matériau fortement extensible tel un mélange ou composition élastomère. Ce transpondeur radiofréquence comprend tout d'abord une antenne rayonnante dipôle. Celle-ci est constituée d'un ressort hélicoïdal mono brin et présente un axe de révolution, un diamètre d'enroulement, un pas d'hélice, un plan médian et un diamètre de fil définissant des diamètres intérieur et extérieur de l'antenne rayonnante. Cette antenne rayonnante a une longueur L0 adaptée pour communiquer sur une bande de fréquence avec un lecteur à émission radiofréquence. Ce transpondeur radio fréquence comprend aussi une partie électronique située à l'intérieur de l'antenne rayonnante. Cette partie électronique comprend une puce électronique, une antenne primaire connectée électriquement à la puce électronique et couplée électromagnétiquement à l'antenne rayonnante. L'antenne primaire présente tout d'abord un axe sensiblement parallèle à l'axe de révolution de l'antenne rayonnante et ensuite un plan médian qui est sensiblement superposée au plan médian de l'antenne rayonnante. Enfin l'antenne primaire est circonscrite dans un cylindre dont l'axe de révolution est parallèle à l'axe de l'antenne primaire et dont le diamètre est supérieur ou égal au tiers du diamètre intérieur de l'antenne rayonnante située au droit de l'antenne primaire. Ce transpondeur radiofréquence est caractérisé en ce que, pour une première zone de l'antenne rayonnante où l'antenne rayonnante n'est pas située au droit de la partie électronique, le rapport entre le pas d'hélice et le diamètre d'enroulement pour au moins une boucle du ressort hélicoïdal est supérieur à 0.8.

On entend ici par le terme « élastomère », l'ensemble des élastomères y compris les TPE (acronyme de Thermo Plastiques Elastomères), tels que par exemple les polymères diéniques, c'est-à-dire comprenant des unités diéniques, les silicones, les polyuréthanes et les polyoléfines.

On entend ici par le terme « couplage électromagnétique, », le couplage par rayonnement électromagnétique, c'est-à-dire le transfert d'énergie sans contact. Physique d'énergie entre deux systèmes incluant d'une part le couplage inductif et d'autre part le couplage capacitif. L'antenne primaire est alors préférentiellement comprise dans le groupe comprenant : une bobine, une boucle ou un segment de fil ou une combinaison de ces éléments conducteurs.

Ici, on entend par le terme sensiblement parallèle que l'angle généré par les directions axiales de chaque antenne est inférieur ou égal à 30 degrés. Dans ce cas, le couplage électromagnétique entre les deux antennes est optimal améliorant notablement les performances de communication du transpondeur radiofréquence.

Ici, il convient d'abord de définir le plan médian de la bobine et du ressort hélicoïdal. Par définition, c'est un plan fictif séparant l'objet en deux parties égales. Dans notre cas, ce plan médian est perpendiculaire à l'axe de chaque antenne. Enfin, on entend ici par le terme « sensiblement superposé » que la distance relative entre les plans médians est inférieure au dixième de la longueur de l'antenne rayonnante.

Ainsi l'intensité du courant électrique étant maximal au centre de l'antenne rayonnante, le champ magnétique induit par ce courant est aussi maximal au centre de l'antenne rayonnante, on assure ainsi que le couplage inductif entre les deux antennes est optimal améliorant de ce fait la performance de communication du transpondeur radiofréquence.

En imposant les dimensions relatives de l'antenne primaire par rapport aux caractéristiques du ressort hélicoïdal de l'antenne rayonnante, on assure que la distance entre les deux antennes sera inférieure au diamètre de l'antenne primaire dans le cas où l'antenne primaire se situe à l'intérieur de l'antenne rayonnante. Ainsi on optimise le couplage électromagnétique entre les deux antennes et de ce fait la performance de communication du transpondeur radio fréquence en émission et réception.

De même en dehors de la zone de l'antenne rayonnante qui est située au droit de la partie électronique et donc de l'antenne primaire, un rapport du pas d'hélice sur le diamètre d'enroulement supérieur à 0,8 pour une boucle de l'antenne rayonnante a pour effet d'étirer le ressort hélicoïdal. Ainsi on diminue la longueur utile de fil pour parcourir une distance nominal de l'antenne rayonnante. De ce fait on diminue la résistance de l'antenne rayonnante. Par conséquence, à iso champ électrique, l'intensité du courant électrique circulant dans l'antenne rayonnante est plus importante à la fréquence propre de l'antenne ce qui permet d'améliorer la performance de communication du transpondeur radiofréquence. De plus, l'étirement du ressort hélicoïdal permet d'améliorer le rendement de l'antenne rayonnante en améliorant le rapport entre la résistance de rayonnement sur la résistance de pertes de celle-ci ce qui permettra aussi de maximiser le champ électrique rayonné par l'antenne rayonnante à iso courant électrique circulant dans l'antenne rayonnante. Enfin, l'étirement de l'antenne rayonnante permet de diminuer le volume occupé par le ressort hélicoïdal à iso pas de l'antenne rayonnante. Ainsi, dans un environnement dimensionnel contraint comme l'épaisseur d'une enveloppe pneumatique, il est possible d'augmenter l'épaisseur de gomme isolante entourant l'antenne rayonnante dans cette première zone. Cette isolation électrique minimise les pertes et améliore donc la performance de communication du transpondeur radio fréquence aussi bien en émission qu'en réception. Bien entendu, il est idéal que chacune des boucle de la première zone de l'antenne rayonnante soit allongée ce qui améliore d'autant la performance de communication du transpondeur radio fréquence passif, en particulier pour les tranpondeurs à identification, nommés tag RFID.

De préférence, le rapport entre le pas d'hélice et le diamètre d'enroulement de chacune des boucles du ressort hélicoïdal dans la première zone de l'antenne rayonnante est inférieure à 3, préférentiellement inférieure à 2.

Bien qu'il soit intéressant d'améliorer la performance radioélectrique de l'antenne rayonnante, il ne faut pas non plus négliger les autres fonctions qu'elle doit remplir. En particulier, le ressort hélicoïdal est une structure souple adaptée pour supporter des sollicitations tridimensionnelles auxquelles le transpondeur radiofréquence devra faire face dans son application pneumatique. De ce fait, il convient de limiter l'étirement de l'antenne rayonnante dans cette première zone afin de conserver une souplesse suffisante à l'antenne rayonnante dans son ensemble et ainsi s'assurer de l'intégrité physique du transpondeur radiofréquence.

Selon un mode de réalisation particulier, les deux dernières boucles du ressort hélicoïdal dans la première zone de l'antenne rayonnante située axialement, le plus extérieurement par rapport à la partie électronique sont jointives sur au moins un tour.

Ceci évite alors un entrelacement au niveau des antennes rayonnantes des transpondeurs radiofréquences lors de la manipulation de ceux-ci. Ainsi, la manutention des transpondeurs radiofréquences est facilitée permettant d'optimiser le coût de revient des transpondeurs radiofréquences. Le fait de limiter cet effet aux boucles situées la plus axialement extérieurement par rapport à la partie électronique n'affecte que faiblement la performance radioélectrique de l'antenne rayonnante.

De préférence, l'antenne primaire étant connectée aux bornes d'une carte électronique comprenant la puce électronique, l'impédance électrique de l'antenne primaire est adaptée à l'impédance électrique de la carte électronique du transpondeur radiofréquence.

On entend par le terme impédance électrique de la carte électronique, l'impédance électrique aux bornes de l'antenne primaire ce qui représente l'impédance électrique de la carte électronique comprenant au moins une puce électronique et un circuit imprimé sur lequel la puce électronique est connectée.

En réalisant l'adaptation d'impédance de l'antenne primaire à celle de la carte électronique, on optimise le transpondeur radiofréquence à la fréquence de communication en améliorant le gain et en ayant un facteur de forme plus sélectif, une bande passante plus étroite, de la carte électronique. Ainsi les performances de communication du transpondeur radiofréquence sont améliorées pour une même quantité d'énergie transmise au transpondeur radiofréquence. Cela se traduit en particulier par une augmentation de la distance de lecture du transpondeur radiofréquence. L'adaptation d'impédance de l'antenne primaire est obtenue par l'ajustement d'au moins l'une des caractéristiques géométriques de l'antenne primaire comme par exemple, le diamètre du fil, le matériau de ce fil et la longueur du fil.

L'adaptation d'impédance de l'antenne primaire peut être aussi obtenue par l'ajout d'un circuit de transformation d'impédance constitué de composants électroniques additionnels entre l'antenne primaire et le circuit électronique comme par exemple, des filtres à base d'inductance et de capacités et des lignes de transmission.

L'adaptation d'impédance de l'antenne primaire peut aussi être obtenue par la combinaison des caractéristiques de l'antenne primaire et des caractéristiques d'un circuit de transformation d'impédance.

Selon un mode de réalisation particulier, la puce électronique et au moins une partie de l'antenne primaire sont noyées dans une masse rigide et isolante électriquement tel que, par exemple, de la résine de type époxy haute température. L'ensemble constitue la partie électronique du transpondeur radiofréquence.

Ainsi, on rigidifie la partie électronique comprenant au moins une partie de l'antenne primaire et la puce électronique connectée au circuit imprimé rendant plus fiable les connexions mécaniques entre ses composants vis-à-vis des sollicitations thermo mécaniques subies par l'objet à identifier.

Cela permet aussi l'industrialisation de la partie électronique du transpondeur radiofréquence indépendamment de l'antenne rayonnante ou de l'objet à identifier. Notamment une miniaturisation du composant électronique comprenant l'antenne primaire et la puce électronique peut être envisagée en utilisant par exemple une micro bobine à spires comme antenne primaire.

Selon un autre mode de réalisation, la partie de l'antenne primaire non noyée dans la masse rigide est revêtue d'un matériau isolant électriquement.

Ainsi, si l'antenne primaire n'est pas entièrement contenue dans la masse rigide et isolante électriquement de la partie électronique, il est utile de l'isoler par l'intermédiaire d'un revêtement dans un matériau isolant électriquement comme ceux employés pour une gaine d'isolation de câble électrique.

Selon un mode de réalisation privilégié, pour la deuxième zone de l'antenne rayonnante où l'antenne rayonnante est située au droit de la partie électronique, le rapport entre le pas d'hélice et le diamètre d'enroulement pour chaque boucle du ressort hélicoïdal est inférieur ou égal à 0,8.

En effet, dans cette deuxième zone de l'antenne rayonnante et tout particulièrement dans la zone se situant au droit de l'antenne primaire, la performance attendue de l'antenne rayonnante est le couplage électromagnétique et en particulier inductif avec l'antenne primaire de la partie électronique. De ce fait, un premier levier pour améliorer ce couplage est d'augmenter l'inductance de l'antenne rayonnante dans cette deuxième zone. ce qui revient à contracter le ressort hélicoïdal. De plus, le fait de contracter l'antenne rayonnante dans cette deuxième zone favorise aussi le transfert d'énergie entre l'antenne primaire et l'antenne rayonnante par l'augmentation de la surface d'échange proposée par l'antenne rayonnante à iso longueur de l'antenne primaire située en vis-à-vis de l'antenne rayonnante. Cette amélioration du transfert d'énergie entraine une meilleure performance de communication du transpondeur radiofréquence.

Selon un mode de réalisation particulier, la géométrie de la partie électronique du transpondeur radiofréquence est inscrite dans un cylindre dont le diamètre est inférieur ou égal au diamètre intérieur de l'antenne rayonnante et dont l'axe de révolution est parallèle à l'axe de révolution de l'antenne rayonnante.

La partie électronique ainsi constituée permet dans le cas où celle-ci serait placée à l'intérieur de l'antenne rayonnante d'assurer un pré positionnement optimisé de l'antenne primaire par rapport à l'antenne rayonnante pour améliorer la performance de communication en réception/émission du transpondeur radiofréquence. En effet, on assure mécaniquement que les deux antennes soient sensiblement parallèles et que la distance les séparant génère un couplage électromagnétique de qualité.

Selon un mode de réalisation spécifique, la communication radioélectrique avec le lecteur radiofréquence s'effectue dans la bande des UHF et tout spécifiquement dans la gamme comprise entre 860 et 960Mhz.

En effet, dans cette bande de fréquence, la longueur de l'antenne rayonnante est inversement proportionnelle à la fréquence de communication. Et au-delà de ces bandes de fréquences, la communication radioélectrique est fortement perturbée voire impossible dans les matériaux élastomères standards. De ce fait, cela constitue le meilleur compromis entre la taille du transpondeur radiofréquence et sa communication radioélectrique notamment en champ lointain permettant d'avoir des distances de communication satisfaisantes pour l'industrie du pneumatique.

Selon un autre mode de réalisation particulier, la longueur L0 de l'antenne rayonnante est comprise entre 30 et 50 millimètres.

En effet, dans la gamme de fréquence entre 860 et 960 MHz et selon les permittivités diélectriques relatives des mélanges élastomères entourant le transpondeur radiofréquence, la longueur totale du ressort hélicoïdal qui est adaptée à la demi longueur d'onde des ondes radioélectrique émises ou reçues par le transpondeur radiofréquence est située dans la fourchette entre 30 et 50 millimètres, de préférence entre 35 et 45 millimètres. Afin d'optimiser le fonctionnement de l'antenne rayonnante à ces longueurs d'ondes, il convient de parfaitement adapter la longueur de l'antenne rayonnante à la longueur d'onde.

Avantageusement, le diamètre d'enroulement du ressort hélicoïdal dans la première zone de l'antenne rayonnante est compris entre 0,6 et 2,0 millimètres, préférentiellement entre 0,6 et 1,6 millimètres.

Cela permet de limiter le volume occupé par l'antenne rayonnante est donc d'augmenter l'épaisseur de mélange élastomère isolant électriquement autour du transpondeur radiofréquence. Bien entendu ce diamètre du ressort hélicoïdal dans la première zone de l'antenne rayonnante peut être constant, variable, continument variable ou variable par morceaux. Il est préférable d'un point de vue de l'intégrité mécanique de l'antenne rayonnante que le diamètre soit constant ou continûment variable.

Selon un mode de réalisation privilégié, le pas d'hélice d'au moins une boucle de l'antenne rayonnante dans la première zone de l'antenne rayonnante est compris entre 1 et 4 millimètres et de préférence entre 1,5 et 2 millmètres.

Cela permet d'une part d'assurer que le rapport du pas d'hélice sur le diamètre d'enroulement du ressort, ou au moins une boucle, dans la première zone de l'antenne rayonnante est inférieur à 3 garantissant un minimum d'élongation du ressort hélicoïdal. De plus, ce pas peut aussi être constant ou variable sur toute la première zone de l'antenne rayonnante. Bien entendu, il est préférable que le pas soit continûment variable ou avec des transitions de faible variation pour éviter des points singuliers dans l'antenne rayonnante qui représenteraient des faiblesses mécaniques de l'antenne rayonnante.

Selon un mode de réalisation avantageux, le diamètre du fil de l'antenne rayonnante est comprise entre 0,05 et 0,25 millimètres, idéalement entre 0,12 et 0, 22 millimètres.

Dans cette gamme de fil, on assure d'une part que la résistance des pertes sera faible améliorant ainsi les performances radioélectriques de l'antenne rayonnante. De plus, limiter le diamètre du fil permet d'éloigner l'antenne rayonnante des conducteurs électriques en augmentant l'épaisseur des mélanges élastomères isolants électriquement. Cependant, il est nécessaire de conserver une certaine résistance mécanique au fil pour supporter les contraintes thermo mécaniques qu'il subira dans un environnement fortement sollicitant comme l'enveloppe pneumatique sans optimiser la limite à rupture du matériau de ces fils, généralement en acier doux. Cela permet d'assurer un compromis technico économique satisfaisant de l'antenne rayonnante.

L'invention a aussi pour objet un patch d'identification constitué d'un transpondeur radiofréquence noyé dans une masse souple et isolante électriquement de mélanges élastomères.

On entend ici par le terme isolant électriquement que la conductivité électrique du mélange élastomère est au minimum en deçà du seuil de percolation des charges conductrices du mélange.

Ainsi, on constitue un patch d'identification qui facilite la mise en place du transpondeur radiofréquence dans des objets à identifier comprenant des parties en matériau de base élastomère. Une couche de gomme de liaison usuelle pourra être employée si nécessaire, pour solidariser le patch d'identification à l'objet à identifier tel un pneumatique.

De plus, les caractéristiques de rigidité et de conductivité électrique du mélange élastomère assurent une insertion mécanique et une isolation électrique de qualité du transpondeur radiofréquence au sein des composants de l'objet à identifier. Ainsi le fonctionnement du transpondeur radiofréquence n'est pas perturbé par l'objet à identifier.

### Description brève des dessins

L'invention sera mieux comprise à la lecture de la description qui va suivre dans le cas d'une application à des bandages pneumatiques. Cette application est donnée uniquement à titre d'exemple et faite en se référant aux figures annexées dans lesquelles les mêmes numéros de référence désignent partout des parties identiques et dans lesquelles :
- La figure 1 présente une vue en perspective d'un transpondeur radiofréquence de l'état de la technique dans une configuration où la partie électronique est située à l'intérieur de l'antenne rayonnante ;
- La figure 2 présente une vue en perspective d'un transpondeur radiofréquence selon l'invention;
- Les figures 3a et 3b sont des illustrations de la longueur du fil de l'antenne rayonnante selon le rapport entre le pas d'hélice et le diamètre d'enroulement du ressort hélicoïdal pour une même longueur élémentaire de l'antenne rayonnante selon que l'on travaille à pas constant ou diamètre d'enroulement constant ;
- La figure 4 est un exemple de transpondeur radiofréquence selon l'invention présentant certaines particularités ;
- La figure 5 est une vue éclatée d'un patch d'identification selon l'invention ;
- La figure 6 présente un graphe de la puissance électrique transmise à deux transpondeurs radiofréquences selon la bande de fréquence d'observation ; et
- La figure 7 est un synoptique d'un procédé de fabrication d'un patch d'identification comprenant un transpondeur radiofréquence selon l'invention.

### Description détaillée de modes de réalisation

Dans ce qui suit, les termes « pneumatique » et « bandage pneumatique » sont employés de façon équivalente et concernent tout type de bandage pneumatique ou non pneumatique (en anglais « tire », « pneumatic tire », « non-pneumatic tire »)

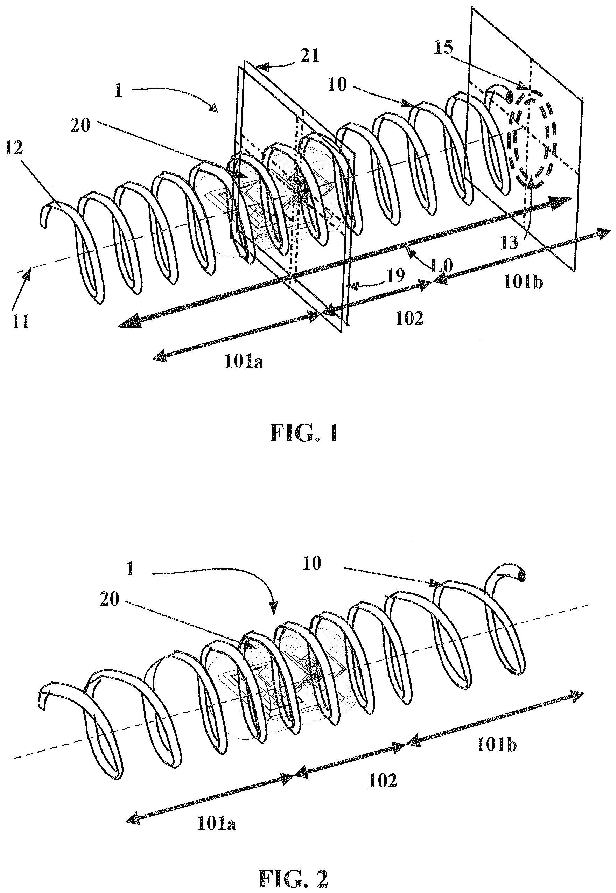

La figure 1 présente un transpondeur radiofréquence 1 de l'état de la technique dans une configuration où la partie électronique 20 est située à l'intérieur de l'antenne rayonnante 10. L'antenne rayonnante 10 est constituée d'un fil en acier 12 qui a été déformé plastiquement afin de former un ressort hélicoïdal présentant un axe de révolution 11. Le ressort hélicoïdal est défini tout d'abord par un diamètre d'enroulement du fil revêtu et un pas d'hélice. Ces deux paramètres géométriques du ressort hélicoïdal sont ici constants. Ainsi, on détermine précisément des diamètres intérieur 13 et extérieur 15 du ressort hélicoïdal en prenant en compte le diamètre du fil. La longueur du ressort L0 correspond ici à la demi-longueur d'onde du signal de transmission radiofréquencedu transpondeur 1 dans une masse de mélange élastomère. Ainsi on peut définir un plan médian 19 au ressort hélicoïdal perpendiculaire à l'axe de révolution 11 séparant l'antenne rayonnante 10 en deux parties égales. La forme géométrique de la partie électronique 20 est circonscrite dans un cylindre dont le diamètre est inférieur ou égal au diamètre intérieur 13 du ressort hélicoïdal. L'enfilement de la partie électronique 20 dans l'antenne rayonnante 10 s'en trouve facilité. Le plan médian 21 de l'antenne primaire se trouve sensiblement superposé au plan médian 19 de l'antenne rayonnante 10. Enfin l'axe de l'antenne primaire est sensiblement parallèle à l'axe de révolution 11 de l'antenne rayonnante 10. On peut diviser l'antenne rayonnante en deux zones distinctes. La première zone 101 de l'antenne rayonnante 10 où le ressort hélicoïdal n'est pas situé au droit de la partie électronique 20. Cette première zone 101 de l'antenne rayonnante 10 comprend deux parties 101a et 101b sensiblement équivalentes encadrant axialement la seconde zone 102 de l'antenne rayonnante 10.

La figure 2 est un transpondeur radiofréquence 1 selon l'invention qui a comme caractéristique distinctive par rapport au transpondeur radiofréquence de l'état de la technique que le rapport du pas d'hélice sur le diamètre d'enroulement d'au moins une boucle de l'antenne rayonnante de la première zone est supérieur à 0,8. Dans notre cas, toutes les boucles de chacune des zones 101a et 101b ont vu leur rapport évolué de manière équivalente. Ceci est obtenue par une diminution du nombre total de boucles pour chacune des sous-zones 101a et 101b. Dans ce cas particulier, le diamètre d'enroulement du fil de l'antenne rayonnante 10 est conservée. Cependant, il aurait été possible aussi de modifier le rapport pas d'hélice sur diamètre d'enroulement de chaque boucle de la première zone 101 en augmentant le diamètre d'enroulement du fil d'acier de l'antenne rayonnante 10 dans la première zone 101 de cette antenne. Dans notre cas, le pas d'hélice de l'antenne rayonnante 10 dans la deuxième zone 102 de l'antenne rayonnante 10 n'a pas été modifié. De ce fait, le rapport entre le pas d'hélice et le diamètre d'enroulement de la deuxième zone 102 de l'antenne rayonnante10 est inférieure à 0,8.

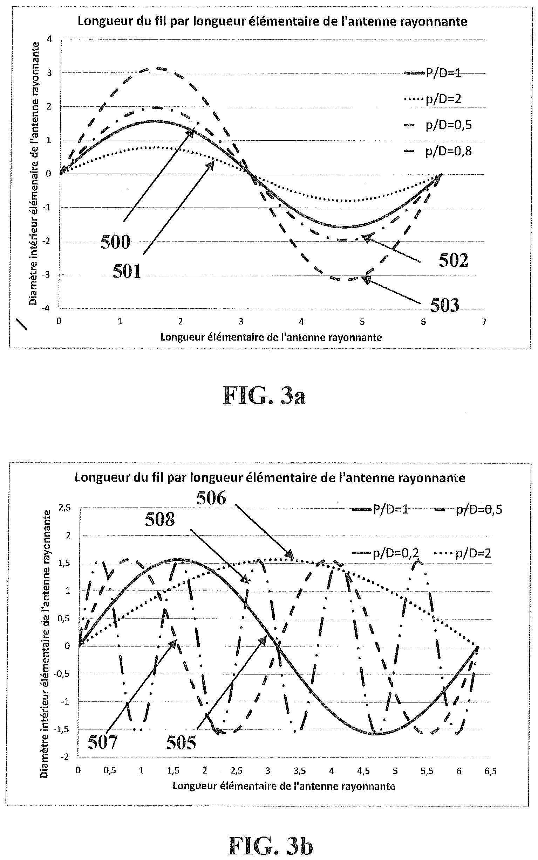

Les figures 3a et 3b sont des illustrations de l'importance du rapport du pas d'hélice sur le diamètre d'enroulement pour une boucle du ressort hélicoïdal vis-à-vis des propriétés radioélectriques et électromagnétiques de l'antenne rayonnante.

La figure 3a est une illustration des variations du rapport du pas d'hélice sur le diamètre d'enroulement d'une boucle lorsque le pas d'hélice de la boucle est constant ainsi que le diamètre de fil constituant la boucle. Pour une longueur élémentaire de l'antenne rayonnante de longueur égale à la zone occupée par une boucle complète pour un rapport égal à 1, la distance curviligne de cette boucle est égale à 2 ^{∗}PI ^{∗}PI unités élémentaires. La courbe en trait continu 500 correspond à cette boucle. En effet, le rayon de cette boucle vaut nécessairement PI unités élémentaires. Si on prend désormais la courbe 501 en pointillé correspondant à un rapport égal à 2. Comme le pas d'hélice est constant, nécessairement le diamètre d'enroulement de cette boucle est deux fois plus petit que le diamètre d'enroulemen de la boucle précédente soit PI unités élémentaires. Alors, la distance curviligne de cette boucle illustrée par les pointillés 501 vaut PI^{∗}PI unités élémentaires. De ce fait la longueur curviligne d'une première boucle, présentant un rapport du pas d'hélice sur le diamètre d'enroulement plus grand qu'une deuxième boucle, est moins élevée que la longueur curviligne de cette deuxième boucle. Les courbes 502 constituée de tirets et 503 constituée de tirets en alternance avec un pointillé illustrent respectivement des rapports de 0,8 et de 0,5. Les longueurs curvilignes de cette deux boucles sont respectivement égales à 2,5^{∗}PI^{∗}PI unités élémentaires et 4^{∗}PI^{∗}PI unités élémentaires.

La figure 3b une illustration des variations du rapport du pas d'hélice sur le diamètre d'enroulement d'une boucle lorsque le diamètre de la boucle est constant ainsi que le diamètre de fil constituant le boucle. Pour une longueur élémentaire de l'antenne rayonnante de longueur égale à la zone occupée par une boucle complète pour un rapport égal à 1, la distance curviligne de cette boucle est égale à 2 ^{∗}PI ^{∗}PI unités élémentaires. La courbe en trait continu 505 correspond à cette boucle. En effet, le rayon de cette boucle vaut nécessairement PI unités élémentaires. Si on prend désormais la courbe 506 correspondant à un rapport égal à 2. Comme le diamètre d'enroulement est constant, nécessairement le pas d'hélice de cette boucle est deux fois plus grand que le pas d'hélice de la boucle précédente soit 4^{∗}PI unités élémentaires. Mais si on se limite à la longueur élémentaire de 2^{∗}PI unités élémentaires, la distance curviligne de cette boucle illustrée par les pointillés vaut PI^{∗}PI unités élémentaires. De la même façon pour les courbes 507 et 508 correspondant respectivement à des rapports de 0,5 et 0, 2 soit respectivement un doublement et un quintuplement du nombre de boucles. La distance curviligne de la courbe 507 illustrée en trait pointillé vaut 4^{∗}PI^{∗}PI unités élémentaires. Et la distance curviligne de la courbe 508 illustrée en trait pointillé en alternance avec deux pointillés vaut 10^{∗}PI^{∗}PI unités élémentaires.

Bien entendu, au lieu de modifier seulement le pas d'hélice ou le diamètre d'enroulement de chaque boucle, il est possible de modifier les deux paramètres simultanément. Seul le rapport obtenu par ces deux modifications aura un impact sur la performance de communication de l'antenne rayonnante.

En effet, la résistance d'un fil conducteur est proportionnel à la longueur curviligne du fil. Plus le rapport du pas d'hélice sur le diamètre d'enroulement de la boucle est élevée, plus la longueur curviligne du fil est courte. De ce fait, moins la résistance électrique de la boucle est élevée. En conclusion, on améliore les propriétés radioélectriques des boucles de l'antenne rayonnante en minimisant cette résistance électrique. En minimisant la résistance électrique de l'antenne rayonnante dans la première zone de l'antenne rayonnante, on améliore l'efficacité de rayonnement de l'antenne aussi bien en émission qu'en réception qui est majoritairement constituée par cette première zone. De plus, minimiser la résistance électrique de l'antenne assure de générer un courant électrique maximum à iso différentiel de potentiels électriques. De ce fait, les performances radioélectriques et donc de communication du transpondeur radiofréquence s'en trouve améliorée.

Dans la deuxième zone de l'antenne rayonnante, l'efficacité de rayonnement de cette deuxième zone plus petite que la première zone, n'est pas essentielle. En effet, cette deuxième zone a pour fonction principale d'assurer un couplage électromagnétique avec l'antenne primaire de la partie électronique. Ce couplage électromagnétique passe principalement par un couplage inductif si l'antenne primaire est une bobine à spires. La performance de ce couplage nécessite tout d'abord la génération d'un champ magnétique par l'antenne rayonnante. Ce champ magnétique est en particulier piloté par l'inductance de l'antenne rayonnante. Pour maximiser l'inductance d'une bobine, il convient de réduire le rapport du pas d'hélice sur le diamètre d'enroulement de la bobine ou d'augmenter le nombre de boucles de la bobine. En réduisant le rapport du pas d'hélice sur le diamètre d'enroulement des boucles de la deuxième zone de l'antenne rayonnante, on maximise le couplage inductif en augmentant l'inductance de l'antenne. De plus, si ce rapport est diminué en ne modifiant que le pas d'hélice de l'antenne, on augmente aussi le nombre de spires constituant la deuxième zone de l'antenne ce qui augmentera la surface de transfert d'énergie entre les deux antennes. Cette augmentation de la surface de transfert d'énergie est bien entendu favorable à la performance de communication du transpondeur radiofréquence.

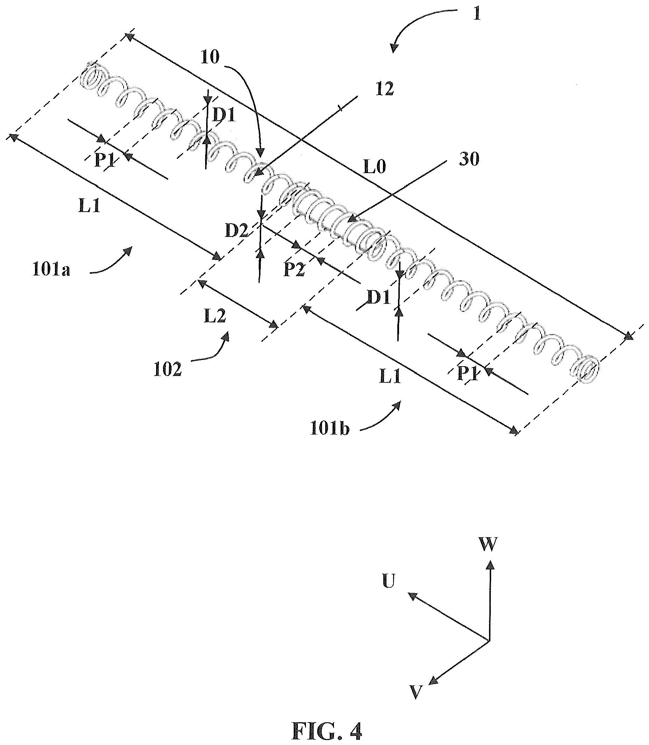

La figure 4 est une illustration d'un transpondeur radiofréquence 1 fonctionnant dans la gamme de fréquence entre 860 et 960 Mhz destiné à être incorporé dans une enveloppe pneumatique par l'intermédiaire d'un patch d'identification en matériaux élastomère. Pour faciliter la performance de radiocommunication et l'intégrité physique du transpondeur radiofréquence 1 au sein de l'enveloppe pneumatique, il sera préférable de disposer l'axe de révolution de l'antenne rayonnante 10 , parallèle à l'axe U, dans une direction perpendiculaire aux fils de la nappe carcasse de l'enveloppe pneumatique à structure radiale, en particulier si ceux-ci sont métalliques.

Le transpondeur radiofréquence 1 présente ici une antenne rayonnante 10 et une partie électronique située à l'intérieur de l'antenne rayonnante 10. La partie électronique comprend une puce électronique connectée à un circuit imprimé. Une antenne primaire constituée d'un fil conducteur comprenant dix sept spires rectangulaires connectées au circuit imprimé. La face opposée à l'antenne primaire du circuit imprimé comprend un circuit galvanique en forme de méandre constituant une ligne de 10 millimètres de long et de 1 millimètre de large. Enfin, le diamètre du cylindre circonscrit de l'antenne primaire est de 0,8 millimètres.

La carte électronique ainsi constituée est noyée dans une masse 30 en résine époxy assurant la fiabilité mécanique des composants électroniques et l'isolation électrique de la carte électronique. Le cylindre circonscrit à la masse rigide 30 a un diamètre de 1,15 millimètres et une longueur de 6 millimètres.

La longueur L0 de l'antenne rayonnante 10 est ici de 45 millimètres et correspond à la demi-longueur d'onde des ondes radioélectriques à la fréquence de 915 MHz dans un milieu de permittivité diélectrique relatif environ égale à 5. L'antenne rayonnante 10 est réalisée à l'aide d'un fil d'acier 12 de diamètre 0,225 millimètre revêtu en surface d'une couche de laiton.

L'antenne rayonnante 10 se décompose en deux zones principales. La première zone 101 correspond à la section de l'antenne rayonnante ne se situant pas au droit de la partie électronique. Elle comprend deux sous zones 101a et 101b entourant de part et d'autre la masse 30 rigide et isolante.

Chaque sous zone 101a 101b d'une longueur L1 de 19 millimètres comprend 12 spires circulaires d'un diamètre d'enroulement D1 constant de 1,275 millimètres. Cela détermine des diamètres intérieur et extérieur de respectivement 1,05 et 1,5 millimètres. Le pas d'hélice P1 des spires circulaires est de 1,55 millimètres. Ainsi, le rapport du pas d'hélice P1 sur le diamètre d'enroulement D1 des spires est de 1,21. Les extrémités axialement extérieures de chaque sous zone 101a et 101b se terminent par 2 spires jointives. De ce fait, le rapport élevé assure de maximiser l'efficacité des propriétés radioélectriques de l'antenne rayonnante 10 dans cette zone 101. De plus, le contact entre les spires situées le plus extérieurement à l'antenne rayonnante 10 empêche l'entrelacement des ressorts hélicoïdaux entre eux lors de la manipulation des transpondeurs radiofréquences. Comme la majorité des spires de la première zone 101 de l'antenne rayonnante 10 présente un rapport supérieur à 0,8, la performance radioélectrique du transpondeur radiofréquence 1 est nettement améliorée.

Sur la seconde zone 102 de l'antenne rayonnante 10 correspondante à la section de l'antenne rayonnante 10 se situant au droit de la partie électronique, l'antenne rayonnante présente une longueur de 7 millimètres. Le ressort hélicoïdal présente un pas d'hélice P2 constant de 1 millimètre et un diamètre d'enroulement D2 constant de 1,575 millimètres. Ainsi, le diamètre intérieur du ressort hélicoïdal de la deuxième zone de l'antenne rayonnante est de 1,35 millimètres Cela permet d'avoir un rapport du pas d'hélice sur le diamètre d'enroulement constant de l'ordre de 0,63. Ce rapport permet de maximiser l'inductance de la deuxième zone 102 de l'antenne rayonnante10 par rapport à la première zone 101 ce qui permet une meilleure efficacité de couplage électromagnétique avec la partie électronique.

Dans ce cas particulier, le diamètre intérieur de l'antenne rayonnante 10, égal à 1,05, de la première zone 101 est inférieur au diamètre de la masse 30, représentant le cylindre circonscrit de la partie électronique, égal à 1,15 millimètres. De ce fait, les sous zones 101a et 101b de la première zone 101 de l'antenne rayonnante 10 représentent des butées mécaniques au mouvement axial de la masse 30 à l'intérieur de l'antenne rayonnante 10. La mise en place de la partie électronique sera réalisée par enfilement de la masse 30 rigide et isolante dans l'antenne rayonnante 10.

De plus, le diamètre du cylindre circonscrit à l'antenne primaire est bien supérieur au tiers du diamètre intérieur du ressort hélicoïdal de la deuxième zone 102 de l'antenne rayonnante. Bien que le cylindre circonscrit à l'antenne primaire ne soit pas coaxial à l'axe de révolution U de l'antenne rayonnante 10, il lui est sensiblement parallèle. Et, la distance minimale entre la deuxième zone 102 de l'antenne rayonnante 10 et l'antenne primaire est inférieure à 0,3 millimètres, bien inférieur au quart du diamètre intérieur de l'antenne rayonnante 10. Cette proximité des antennes est autorisée par le pas P2 resserré appliqué à la deuxième zone 102 de l'antenne rayonnante 10 permettant d'obtenir une tolérance plus petite des dimensions du ressort en particulier le diamètre d'enroulement D2. De plus cette proximité assure un couplage électromagnétique entre les deux antennes de meilleure qualité. Bien entendu, ce couplage électromagnétique aurait pu être amélioré en utilisant des spires de forme identique entre l'antenne primaire et l'antenne rayonnante, comme par exemple des spires circulaires. Ce couplage aurait été optimisée aussi en rendant coaxial les axes des deux antennes ce qui revient à placer la carte électronique à l'intérieur de l'antenne primaire pour minimiser la dimension axiale de la partie électronique. Ainsi, la qualité de la surface de transfert d'énergie électromagnétique entre les deux antennes aurait été optimale.

D'autres modes de réalisation spécifiques, notamment en cas de variation du diamètre d'enroulement du ressort hélicoïdal entre les première et deuxième zones de l'antenne rayonnante et que le diamètre intérieur de la première zone de l'antenne rayonnante est plus petit que le diamètre du cylindre circonscrit à la partie électronique, peuvent être employés.

Un premier mode consiste à mettre en synergie l'étape de la réalisation de l'antenne rayonnante avec l'étape d'assemblage de cette même antenne rayonnante avec la partie électronique réalisée lors de la première phase afin de faciliter l'insertion de cette partie électronique au sein de l'antenne rayonnante.

Ainsi, on réalise tout d'abord une première partie de l'antenne rayonnante à l'aide d'une machine à enrouler les ressorts délivrant un fil d'acier de diamètre externe de 150 micromètres qui est déformée plastiquement par déplacement imposée. Bien entendu, la machine peut être automatisée afin d'adapter la déformation appliquée pour modifier le diamètre d'enroulement et le pas d'hélice à chaque boucle du ressort hélicoïdal en cours de fabrication. Cette première partie de l'antenne rayonnante comprend nécessairement la première sous zone de la première zone de l'antenne rayonnante et la quasi-totalité de la deuxième zone de l'antenne rayonnante qui présentera un diamètre d'enroulement plus élevé. Et éventuellement le pas d'hélice des boucles de cette deuxième zone est différent de celui des boucles de la première zone du ressort hélicoïdal.

Après cette première étape, la fabrication du ressort hélicoïdal est stoppée afin de mettre en place la partie électronique réalisée lors de la première phase à l'intérieur de la première partie de l'antenne rayonnante réalisée. L'opération est effectuée sur la machine à enrouler les ressorts elle-même.

Elle nécessite tout d'abord de relaxer les contraintes dans le ressort hélicoïdal formé en libérant l'une des extrémités du ressort hélicoïdal. Ceci a pour effet de diminuer les précontraintes dans le ressort hélicoïdal conduisant à augmenter le diamètre d'enroulement du ressort réalisé. Ensuite la mise en place de la partie électronique dans cette première partie du ressort hélicoïdal relaxé est effectuée à l'aide d'un pistolet qui est positionné en lieu et place du doigt déformant le fil acier. Le changement d'outil est fait à l'aide de la rotation d'une broche dont les extrémités angulaires sont d'une part le pistolet et d'autre part le doigt de déformation du fil d'acier.

Cette mise en place consiste, par exemple, à la mise en appui de l'une des extrémités axiales de la partie électronique contre une boucle de la première partie de l'antenne rayonnante tout en assurant un parallélisme voire une coaxialité entre l'axe de révolution de la première partie de l'antenne rayonnante de l'axe de révolution de la partie électronique. De plus, le positionnement axial de la partie électronique au sein de la première partie de l'antenne rayonnante doit permettre de sensiblement centrer le plan médian de l'antenne primaire de la partie électronique par rapport à l'antenne rayonnante finale.

Cette mise en place est effectuée à l'aide d'un pistolet à propulsion mécanique. Cependant tout autre type de propulsion : magnétique, pneumatique, hydraulique ou en combinaison est envisageable. Ensuite, le doigt de déformation est remis en position, la partie électronique étant maintenue en position à l'aide de la deuxième zone de l'antenne rayonnante déjà réalisée.

Enfin la troisième étape consiste à reprendre la constitution du ressort hélicoïdal où on l'avait stoppé à la fin de la première étape avec la présence de la partie électronique. Après avoir libéré la partie électronique de ses moyens de saisie et de positionnement et de les avoir évacué de la zone de réalisation du ressort hélicoïdal, on réalise la deuxième sous zone de la première partie de l'antenne rayonnante. Le fil d'acier est alors sectionné lorsque la longueur du ressort hélicoïdal a atteint la longueur L0 désirée

Un deuxième mode de réalisation du transpondeur radiofréquence lorsque le diamètre d'enroulement du ressort varie entre les première et deuxième zones de l'antenne rayonnante consiste à réaliser tout d'abord une antenne rayonnante sous la forme d'un ressort hélicoïdal monobrin comprenant une deuxième zone dans laquelle sera mise la partie électronique. Cette deuxième zone comprend un diamètre d'enroulement D2 et un pas d'hélice P2. Le ressort hélicoïdal comprend aussi deux segments d'une première zone de l'antenne rayonnante situés à chaque extrémité de la deuxième zone. Cette première zone est défini par des hélices ayant un diamètre d'enroulement D1 et un pas d'hélice PI. Ce type de ressort hélicoïdal peut classiquement être fabriqué sur une machine à enrouler standard ayant des cycles de fabrication optimisés en temps.

Ensuite, vient l'étape d'assemblage de la partie électronique réalisée lors de la première phase dans l'antenne rayonnante constituée à l'étape précédente.

Dans un premier temps, il convient de repérer sur le ressort hélicoïdal réalisé à l'étape précédente, une zone de transition qui comprend généralement une spire entre la deuxième zone et un segment de la première zone de l'antenne rayonnante.

Le passage de la première zone à la deuxième zone se traduit par une variation du diamètre d'enroulement du fil accompagnée éventuellement d'une variation du pas d'hélice. Pour repérer cette zone de transition, il convient d'employer par exemple une caméra se focalisant sur quelques spires du ressort hélicoïdal. Idéalement on présente une extrémité du ressort hélicoïdal et on déplace le ressort hélicoïdal suivant son axe de révolution U devant le champ de la caméra. Un logiciel de traitement d'images ou l'œil humain permet d'observer le diamètre d'enroulement du ressort comme étant le cylindre circonscrit au ressort hélicoïdal d'axe de révolution U. On repère ainsi la variation du diamètre du cylindre correspondant à la zone de transition entre deux zones où le diamètre d'enroulement est constant.

On repère ensuite la dernière spire de la zone de transition qui est en contact avec la deuxième zone du ressort hélicoïdal où le diamètre d'enroulement est D2. Pour cela on déplace de nouveau par des allers retours successives le ressort hélicoïdal le long de l'axe de révolution U devant le champ de la caméra.

Par rapport à une droite de pliage du ressort défini sur la machine sur laquelle est monté le ressort hélicoïdal, il convient de positionner une extrémité radialement extérieure de la dernière spire de la zone de transition sur la droite de pliage. Pour cela, il convient à la fois de mouvoir le ressort hélicoïdal selon une direction suivant l'axe de révolution U du ressort. Eventuellement, il faut mouvoir transversalement le ressort afin que la zone de pliage tangente le cylindre circonscrit au ressort hélicoïdal au niveau de la zone de transition. Enfin, il faut faire tourner le ressort autour de son axe de révolution U jusqu'à une position où une extrémité de la dernière spire se trouve sur la droite de pliage. La position du ressort hélicoïdal est alors bloquée en rotation et déplacement.

On lance le cycle de la machine qui provoque le pliage du segment de la première zone du ressort hélicoïdal par rapport au reste du ressort hélicoïdal autour de la droite de pliage qui est perpendiculaire à l'axe de révolution U. Ce pliage d'un angle, classiquement de 90° pour nos applications où le diamètre du cylindre circonscrit à la partie électronique est proche du diamètre intérieur de la deuxième zone de l'antenne rayonnante, permet de générer une ouverture au niveau de l'extrémité de la deuxième zone du ressort hélicoïdal. Le diamètre inscrit de cette ouverture est supérieur ou égal au diamètre du cylindre circonscrit à la partie électronique permettant l'insertion aisée de la partie électronique.

On introduit la partie électronique dans la deuxième zone de l'antenne rayonnante par l'intermédiaire de l'ouverture. L'extrémité axiale de la partie électronique selon l'axe principale du cylindre circonscrit à la partie électronique doit être située à une distance inférieure au pas d'hélice de la deuxième zone du ressort hélicoïdal au-dessus d'un plan particulier. Ce plan dont la normale est l'axe de révolution de la partie du ressort hélicoïdal bloquée dans la machine passe par le point de pliage; Ainsi, la partie électronique, une fois insérée dans la deuxième zone de l'antenne rayonnante ne gêne nullement de repliement du segment de la première zone de l'antenne rayonnante. Idéalement, la partie électronique est entièrement en dessous du plan particulier.

On plie de nouveau le ressort hélicoïdal au niveau du point de pliage d'un second angle opposé au premier angle autour de l'axe perpendiculaire à l'axe de révolution de la partie du ressort hélicoïdal bloquée dans la machine. L'amplitude de cet angle est ici d'environ 105 degrés pour un fil en acier doux de diamètre 0,225 mm. L'amplitude est au moins égale ou supérieure à l'amplitude du premier angle. Les axes de révolution de la partie bloquée du ressort hélicoïdal et de la partie libre du ressort hélicoïdal sont alors colinéaires. Dans ce cas, le premier pliage du segment de la première zone provoque une plastification localisée de l'acier au niveau du point de pliage. Pour assurer que le ressort final présente un axe de révolution de forme droite, il convient de plastifier la zone autour du point de pliage lors du second pliage ce qui entraine une augmentation du second angle de pliage.

L'antenne rayonnante ainsi constituée munie de sa partie électronique parfaitement positionnée à l'intérieur représente le transpondeur radiofréquence selon l'invention. Optionnellement, l'introduction de la partie électronique dans la deuxième zone du ressort hélicoïdal se fait par une mise en appui de la seconde extrémité axiale de la partie électronique sur une spire de la seconde zone de transition entre les première et deuxième zones du ressort hélicoïdal. Cette mise en appui assure à la fois le positionnement axiale de la partie électronique au sein du ressort hélicoïdal et une coaxialité de l'antenne primaire de la partie électronique avec le ressort hélicoïdal.

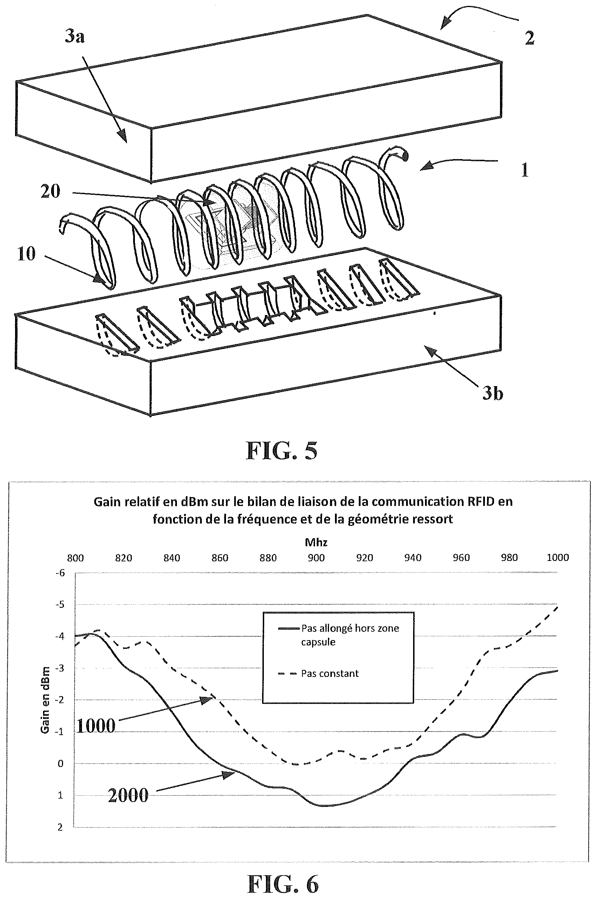

La figure 5 présente un patch d'identification 2 comprenant un transpondeur radiofréquence 1 selon l'invention noyé dans une masse souple 3 en matériau élastomère isolant électriquement représentée par les plaques 3a et 3b. Le transpondeur radiofréquence 1 est généralement placé au milieu du patch 2 afin de maximiser la plus petite distance entre la première zone 101 de l'antenne rayonnante 10 et la surface externe du patch d'identification 2.

Dans le cas où le rapport entre le pas d'hélice et le diamètre d'enroulement de la boucle de la première zone 101 de l'antenne rayonnante 10 est augmenté en réduisant le diamètre d'enroulement du fil d'acier, le volume occupé par le transpondeur radiofréquence 1 au sein de la masse 3 en matériaux élastomère est diminué.

Cela permet, dans une première application , de réduire l'épaisseur de chacune des plaques 3a et 3b du patch d'identification 2 en gardant la même distance entre la surface externe du patch d'identification 2 et la première zone 101 de l'antenne rayonnante 10. Cette réduction de l'épaisseur du patch d'identification 2 facilitera son introduction au sein d'un objet à identifier tout en conservation le même potentiel d'isolation électrique. Dans une seconde application, cela permet d'augmenter la distance entre la première zone101 de l'antenne rayonnante 10 et la surface externe du patch d'identification 2. Cette seconde application permet d'améliorer la performance radioélectrique et donc la performance de communication du transpondeur radiofréquence 1 placé dans le patch d'identification 2. En effet, l'isolation électrique du patch 2 est proportionnelle à la distance entre la première zone 101 de l'antenne rayonnante 10 et la surface externe du patch 2. Le fonctionnement radioélectrique du transpondeur radiofréquence 1 est amélioré, ou égal si cette distance a atteint son asymptote d'efficacité, par une meilleure isolation électrique du patch d'identification 2.

La figure 6 est un graphe de la puissance électrique transmise par des transpondeurs radiofréquences passifs situés chacun à l'intérieur d'une enveloppe pneumatique de marque Michelin XINCITY de dimension 275/70 R22.5 à un lecteur radiofréquence externe. La fréquence de communication des transpondeurs radiofréquence est centrée sur 915 MHz. Le protocole de mesure employé correspond à la norme ISO/IEC 18046-3 intitulé «Identification Electromagnetic Field Threshold and Frequency Peaks ». Les mesures ont été effectuées pour un balayage en fréquence large et non ponctuellement comme habituellement. L'axe des abscisses représente la fréquence du signal de communication. L'axe des ordonnées est la puissance électrique reçue par le lecteur radiofréquence exprimée en décibel relativement à la puissance électrique maximale transmise par un transpondeur radiofréquence actuel de l'état de l'art. La courbe en pointillé 1000 représente la réponse d'un transpondeur radiofréquence selon le document cité. La courbe en continu 2000 représente la réponse d'un transpondeur selon l'invention pour un même signal émis par le lecteur radiofréquence. On note un gain d'environ deux décibels en faveur du transpondeur radiofréquence selon l'invention sur la fréquence de communication du lecteur radiofréquence. Le gain reste de l'ordre d'au moins un décibel sur une bande de fréquence élargie autour de la fréquence de communication.

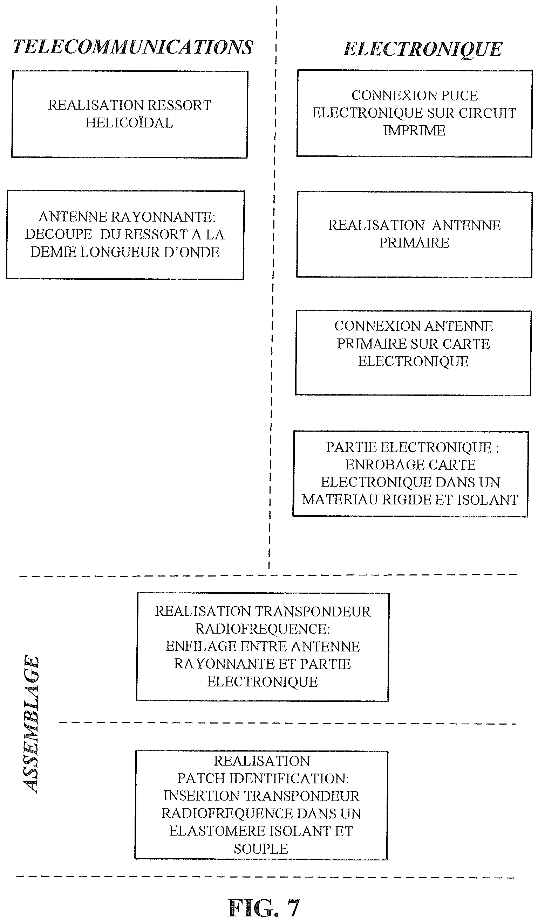

La figure 7 est un synoptique d'un procédé de fabrication d'un patch d'identification 2 selon l'invention. L'obtention du patch d'identification 2 nécessite la fabrication initiale d'un transpondeur radiofréquence 1 selon l'invention. Les diverses étapes chronologiques de la fabrication du transpondeur radiofréquence 1 puis celles du patch d'identification 2 sont identifiées. On délimite nettement les étapes liées aux métiers des télécommunications ou de l'électronique de celles de l'assemblage qui peut être réalisé par le manufacturier pneumatique par exemple pour une application sur des bandages pneumatiques.

En s'appuyant sur la figure 7 représentant un synoptique de fabrication d'un patch d'identification 2, on distingue trois phases indépendantes et successives.

Dans une première phase, correspondant au métier des télécommunications, on constitue l'antenne rayonnante 10 qui assurera la transmission et la réception des ondes radioélectriques avec le lecteur radiofréquence externe.

Selon un mode de réalisation spécifique, la première étape consiste à déformer plastiquement le fil d'acier 12 de diamètre externe de 200 micromètres, mais on peut aussi prendre des diamètres de fil de 50, 100, 150 ou 250 micromètres, pour former un ressort hélicoïdal à l'aide de moyens industriels adaptés tel qu'un tour à enrouler les ressorts. Dans notre cas, il est possible de modifier le pas d'hélice du ressort hélicoïdal entre chaque boucle du ressort, celui-ci pouvant être inférieur à 4 millimètres. De même pour chaque boucle du ressort hélicoïdal, il est possible de modifier le diamètre d'enroulement du ressort hélicoïdal entre 0,6 et 2 millimètres. On obtient ainsi un ressort le diamètre d'enroulement variable qui est petit vis-à-vis de la longueur de l'antenne rayonnante finale comprise entre 30 à 50 millimètres que l'on souhaite, par exemple 40 millimètres. Un traitement thermique peut être appliqué après cette étape de déformation plastique, chauffage supérieure à 200° Celsius pendant au moins 30 minutes, afin de relaxer les précontraintes dans le ressort hélicoïdal ainsi formé.

La seconde étape consiste à sectionner le ressort hélicoïdal par découpe laser à la longueur souhaitée correspondant à la demi longueur d'onde de la fréquence des signaux radioélectriques de communication en tenant compte de la vitesse de propagation de ces ondes dans un milieu élastomère, soit environ 40 millimètres. La pièce mécanique ainsi obtenue représente l'antenne rayonnante 10 selon l'invention.

Selon un mode de réalisation spécifique, la première boucle réalisée est jointive avec la boucle contiguë et il en est de même pour les deux dernières boucles de l'antenne rayonnante. Pour cela, il convient au préalable de connaitre la longueur de l'antenne rayonnante que l'on souhaite obtenir pour créer ces deux boucles de terminaison à la bonne longueur du ressort hélicoïdal de telle façon que l'antenne rayonnante finale, après relaxation des précontraintes, soit à la bonne longueur souhaitée.

Dans une deuxième phase, on réalise la partie électronique du transpondeur radiofréquence, qui assurera l'interrogation et la réponse de la puce électronique vers l'antenne rayonnante. La transmission d'information entre l'antenne rayonnante et la partie électronique est réalisée par couplage électromagnétique à l'aide d'une antenne primaire.

Ce dispositif électronique, encapsulé dans la masse rigide, comprend d'une part d'une puce électronique et d'autre part d'une antenne primaire.

Dans un premier mode de réalisation de ce dispositif électronique, on emploie le procédé leadframe en matière de support électro mécanique à l'antenne primaire et à la puce électronique représentant l'équivalent d'un circuit imprimé. Ce procédé est particulièrement bien adapté dans cette configuration en raison de sa facilité de miniaturisation.

La première étape consiste à composer la carte électronique. Pour cela on fixe, en premier lieu, sur la grille ou leadframe la puce électronique à l'aide d'une colle conductrice par exemple la H20E de la marque Tedella. Et le câblage de la puce est effectué par la technique de wire-bonding, c'est à-dire la réalisation d'un pont électrique par l'intermédiaire, par exemple, de fils en or de diamètre 20 micromètres entre la puce électronique et le circuit imprimé représenté par la grille. On peut alors mesurer l'impédance électrique de la carte électronique aux points de fixation de l'antenne primaire sur la grille à l'aide d'un appareil électrique adaptée comme un impédancemètre.

La deuxième étape consiste à réaliser l'antenne primaire. Dans un mode de réalisation, cette antenne sera constituée d'une bobine à spires circulaires construite directement sur la grille (lead frame) par la technologie du câblage de fil (wire-bonding). Une autre variante d'antenne primaire consiste à créer une antenne à l'aide de deux segments filaires de cuivre connectés à la carte électronique au moyen d'une technique de soudure métallique employée dans l'industrie électronique et orientés dans des directions opposées pour former un dipôle. Pour la construction de la bobine à spires sur la grille, un fil en or de 20 micromètre de diamètre sera employé, on aurait pu employer aussi du fil d'aluminium ou de cuivre palladium, pour réaliser les demi-spires de la bobine sur la face verso de la grille. Le diamètre de la demi-spire est de 400 micromètres, on emploie la technique des ultrasons classique dans l'industrie des semiconducteurs pour connecter électriquement les fils d'or sur la grille. Ensuite sur la face recto de la grille, on réalise l'autre demi spire afin d'obtenir une bobine cylindrique à 15 spires de diamètre 400 micromètres.

Le nombre de spires de l'antenne primaire est déterminé de telle sorte que l'impédance électrique de l'antenne primaire soit adaptée à l'impédance électrique de la carte électronique comprenant au moins le circuit imprimé représenté par la grille et la puce électronique. Dans notre cas, l'impédance électrique de la puce électronique seule est un nombre complexe ayant une valeur par exemple de (10-j^{∗}150) ohms. Ainsi une bobine de 15 spires de diamètre 400 micromètres correspond à une bonne adaptation de l'impédance électrique de la carte électronique construite sur une grille de connexions en cuivre.

La dernière étape de réalisation de la partie électronique consiste à encapsuler le circuit imprimé, les composants qui lui sont connectés et l'antenne primaire à l'aide d'une résine époxy haute température, dans une masse rigide. Pour cela, on utilise la technologie du globtop bien connue d'un homme du métier. La masse rigide forme une capsule protégeant la carte électronique du transpondeur radiofréquence.

Dans un autre mode de réalisation du dispositif électronique on commence tout d'abord par la réalisation de l'antenne primaire 24 à l'aide d'un fil de cuivre de 180 micromètre revêtu d'une gaine thermoplastique isolante électriquement. On enroule ce fil sur un noyau tubulaire rigide et isolant électriquement en réalisant une bobine d'une dizaine de spires de diamètre extérieur de 1millimètre avec un pas d'hélice de 0,2 millimètre se terminant par deux extrémités non revêtues. Il est alors possible d'évaluer la surface périphérique réelle s de l'antenne primaire à l'aide du diamètre du fil de cuivre, du diamètre extérieur de l'antenne, du pas d'hélice et du nombre total de spires. Dans ce cas, le rayon de la surface hélicoïdale est de 500 micromètres.

On réalise la carte électronique à l'aide d'un support flexible. Dans une première variante, la puce électronique est fixée à l'aide d'une colle conductrice de type ACP (acronyme Anisotropic Conductive Paste) ne nécessitant pas de câblage électrique entre la puce et la carte électronique. Dans une seconde variante, la puce électronique est fixée à l'aide d'une colle non conductrice de montage de composants électroniques. Le câblage de la puce à la carte électronique est effectué par la technique de wire-bonding, c'est à-dire la réalisation d'un pont électrique par l'intermédiaire, par exemple, de fils en or de diamètre 20 micromètres positionnés entre la puce électronique et le support flexible représentant le circuit imprimé ..

Ensuite on connecte les deux extrémités non revêtues de l'antenne primaire 24 au circuit imprimé 26 en utilisant une colle conductrice par exemple la H20E de la marque Tedella.

Enfin on recouvre la carte électronique et les terminaisons non revêtues de l'antenne primaire par un matériau rigide et isolant électriquement de type résine époxy haute température par la technique globtop bien connu des hommes du métier.

La troisième phase de la réalisation du transpondeur radiofréquence consiste à assembler la partie électronique réalisée à la deuxième étape à l'antenne rayonnante réalisée à la première étape.

Tout d'abord on saisit à l'aide d'une pince à long bec adaptée la partie électronique inscrite dans un cylindre dans le diamètre est inférieur ou égal au diamètre interne de l'antenne rayonnante 10 réalisée à la première étape, soit de l'ordre du millimètre.

On insère la partie électronique à l'intérieur de l'antenne rayonnante en positionnant l'axe de symétrie de l'antenne primaire dans la direction de l'axe de révolution de l'antenne rayonnante. De plus, on enfonce la partie électronique dans l'antenne rayonnante jusqu'à ce que le plan médian de l'antenne primaire coïncide avec le plan médian de l'antenne rayonnante. Ensuite on libère la partie électronique de la pince à long bec et retire délicatement la pince de l'intérieur de l'antenne rayonnante.

Un auto centrage, parallélisme des axes et position relative des plans médians entre l'antenne rayonnante et l'antenne primaire, est ainsi réalisé favorable à un couplage inductif de qualité entre les deux antennes.

L'ensemble ainsi constitué représente un transpondeur radiofréquence selon l'invention.

La dernière étape, une fois le transpondeur radiofréquence réalisé, est l'obtention d'un patch d'identification pour faciliter une mise en application du transpondeur radiofréquence dans des objets à identifier en partie constitués par des mélanges élastomères.

On place le transpondeur radiofréquence constitué à l'étape précédente au centre d'une masse souple. Comme par exemple illustré dans la figure 5, le transpondeur radiofréquence 1 est pris en sandwich entre deux plaques 3a et 3b en matériau élastomère cru de dimensions fonction de celle du transpondeur radiofréquence 1 et une épaisseur comprise par exemple entre 2 et 5 millimètres. La direction longitudinale des plaques correspond à l'axe de l'antenne rayonnante 10. L'ensemble se situe au préalable sur la face interne d'une matrice métallique d'un outil de presse de dimension adaptée au volume de masse élastomère.

On applique à l'aide d'un poinçon métallique complémentaire de la matrice, un effort de compression au moyen d'un outil de presse, par exemple une presse uni axiale pneumatique, à l'ensemble afin de former une géométrie compacte présentant un axe de symétrie, de longueur par exemple de 60 millimètres, inscrit dans un cylindre de diamètre d'environ 20 millimètres correspondant à un patch d'identification du transpondeur radiofréquence selon l'invention.

D'autres procédés peuvent être employés pour incorporer le transpondeur radiofréquence 1, au sein d'une masse d'un ou plusieurs mélanges élastomères comme par exemple le procédé d'extrusion ou d'injection.

Dans un mode de réalisation particulier, on emploie des promoteurs d'adhésion bien connus de l'homme du métier entre la masse rigide en résine époxy haute température encapsulant la partie électronique du transpondeur radiofréquence et le mélange élastomère du patch d'identification. Cela peut améliorer l'endurance du transpondeur radiofréquence en service.

Finalement, la mise en œuvre industrielle d'un transpondeur radiofréquence, selon l'invention pour un objet à identifier tel un bandage pneumatique peut être effectuée selon au moins deux modes de réalisation. Dans un premier mode de réalisation préférentielle, il suffit d'incorporer le transpondeur radiofréquence ou le patch d'identification en mélange élastomère cru dans l'ébauche du pneumatique lors de la confection du bandage pneumatique. On place géométriquement le transpondeur ou le patch d'identification entre les divers composants élastomères de l'ébauche crue du bandage pneumatique. Idéalement, il est placé dans une zone géographique subissant des niveaux de déformations acceptables pour que l'antenne rayonnante 10 ne soit pas déformée plastiquement. L'ébauche subit les diverses phases de fabrication du pneumatique dont la cuisson en autoclave vulcanisant les différents mélanges élastomères et rendant solidaire le transpondeur ou le patch d'identification du bandage pneumatique ainsi réalisé. Le transpondeur radiofréquence est alors prêt à l'emploi.

Un autre mode de réalisation préférentiel consiste à figer la structure élastomère du patch d'identification par réticulation ou vulcanisation au cours d'une étape postérieure à la fabrication du patch d'identification. Le dispositif obtenu à la suite de cette opération est fixé sur une zone d'accueil du bandage pneumatique par une technique classique de fixation élastomère/élastomère connue de l'homme du métier comme par exemple l'adhésion par réticulation à froid d'une couche de gomme de liaison sur.la gomme intérieure du bandage pneumatique Le transpondeur radiofréquence du pneumatique est alors prêt à l'emploi.

## Revendications

1. Transpondeur radio fréquence (1) de type passif destiné à être intégré à une masse en mélange élastomère comprenant :
- une antenne rayonnante (10) dipôle constituée d'un ressort hélicoïdal mono brin présentant un axe de révolution (11), un diamètre d'enroulement (D1,D2), un pas d'hélice (P1,P2), un plan médian (19) et un diamètre de fil définissant des diamètres intérieur (13) et extérieur (15) de l'antenne rayonnante (10), dont la longueur (L0) est adaptée pour communiquer sur une bande de fréquence avec un lecteur à émission radiofréquence et
- une partie électronique (20) située à l'intérieur de l'antenne rayonnante (10) comprenant :
i. une puce électronique ;
ii. une antenne primaire connectée électriquement à la puce électronique et couplée électro magnétiquement à l'antenne rayonnante (10) ;
iii. ladite antenne primaire présentant un axe sensiblement parallèle à l'axe de révolution (11) de l'antenne rayonnante(10) ;
iv. ladite antenne primaire présentant un plan médian (21) qui est sensiblement superposé avec le plan médian (19) de l'antenne rayonnante (10) ; et
v. ladite antenne primaire étant circonscrite dans un cylindre dont l'axe de révolution est parallèle à l'axe de l'antenne primaire et dont le diamètre est supérieur ou égal au tiers du diamètre intérieur de l'antenne rayonnante (10) située au droit de l'antenne primaire ;
**caractérisé en ce que,** pour une première zone (101, 101a, 101b) de l'antenne rayonnante (10) où l'antenne rayonnante (10) n'est pas située au droit de la partie électronique (20), le rapport entre le pas d'hélice (P1) et le diamètre d'enroulement (D1) pour au moins une boucle du ressort hélicoïdal est supérieur à 0,8.

2. Transpondeur radio fréquence (1) selon la revendication 1 dans lequel le rapport entre la pas d'hélice (P1) et le diamètre d'enroulement (D1) de chaque boucle du ressort hélicoïdal dans la première zone (101, 101a, 101b) de l'antenne rayonnante (10) est inférieur à 3.

3. Transpondeur radiofréquence (1) selon l'une des revendications précédentes dans lequel les deux dernières boucles dans la première zone (101, 101a, 101b) de l'antenne rayonnante (10) située axialement, le plus extérieurement par rapport à la partie électronique (20) sont jointives sur au moins un tour.

4. Transpondeur radiofréquence (1) selon l'une des revendications précédentes dans lequel l'antenne primaire étant connectée aux bornes d'une carte électronique comprenant la puce électronique, l'impédance électrique de l'antenne primaire est adaptée à l'impédance électrique de la carte électronique.

5. Transpondeur radiofréquence (1) selon l'une des revendications précédentes dans lequel la puce électronique et au moins une partie de l'antenne primaire sont noyées dans une masse (30) rigide et isolante électriquement.

6. Transpondeur radiofréquence selon la revendication précédente dans lequel la au moins une partie de l'antenne primaire non noyée dans la masse rigide est revêtue d'un matériau isolant électriquement.

7. Transpondeur radiofréquence (1) selon les revendications précédentes dans lequel, pour une deuxième zone (102) de l'antenne rayonnante (10) où l'antenne rayonnante (10) est située au droit de la partie électronique (20), le rapport entre le pas d'hélice (P2) et le diamètre d'enroulement (D2) pour chaque boucle du ressort hélicoïdal est inférieur ou égal à 0,8.

8. Transpondeur radiofréquence (1) selon l'une des revendications précédentes dans lequel la géométrie de la partie électronique du transpondeur radiofréquence est inscrite dans un cylindre dont le diamètre est inférieur ou égal au diamètre intérieur (13) de l'antenne (10) et dont l'axe de révolution est parallèle à l'axe de révolution (11) de l'antenne rayonnante (10).

9. Transpondeur radiofréquence (1) selon l'une des revendications précédente dans lequel la communication radiofréquence avec le lecteur à émission radiofréquence s'effectue dans la bande des UHF.

10. Transpondeur radiofréquence (1) selon la revendication précédente dans lequel la communication radiofréquence avec le lecteur à émission radiofréquence s'effectue dans la bande comprise entre 860 et 960 MHz.

11. Transpondeur radiofréquence (1) selon la revendication précédente dans lequel la longueur (L0) de l'antenne rayonnante (10) est comprise entre 30 et 50 millimètres.

12. Transpondeur radiofréquence (1) selon l'une des revendications 9 à 11 dans lequel le diamètre d'enroulemnt (D1) de l'antenne rayonnante (10) dans la première zone (101, 101a, 101b) de l'antenne rayonnante (10) est compris entre 0,6 et 2,0 millimètres.

13. Transpondeur radiofréquence (1) selon l'une des revendications 9 à 12 dans lequel le pas d'hélice (P1) d'au moins une boucle de l'antenne rayonnante (10) dans la première zone (101, 101a, 101b) de l'antenne rayonnante (10) est compris entre 1 et 4 millimètres.

14. Transpondeur radiofréquence (1) selon les revendications 9 à 13 dans lequel le diamètre du fil (12) de l'antenne rayonnante (10) est compris entre 0,05 et 0,25 millimètres.

15. Patch d'identification (2) comportant un transpondeur radiofréquence (1) selon l'une quelconque des revendications précédentes, dans lequel le transpondeur radiofréquence (1) est noyé dans au moins un mélange élastomère (3) souple et isolant électriquement.

## Patentansprüche

1. Passiver Radiofrequenz-Transponder (1), der dazu bestimmt ist, in eine Masse aus Elastomermischung eingebaut zu werden, der enthält:
- eine strahlende Dipolantenne (10) bestehend aus einer Eindraht-Schraubenfeder, die eine Drehachse (11), einen Wicklungsdurchmesser (D1, D2), eine Gewindesteigung (P1, P2), eine Mittelebene (19) und einen Drahtdurchmesser aufweist, der Innen- (13) und Außendurchmesser (15) der strahlenden Antenne (10) definiert, deren Länge (L0) geeignet ist, mit einem Lesegerät mit Radiofrequenz-Abstrahlung in einem Frequenzband zu kommunizieren, und
- einen im Inneren der strahlenden Antenne (10) befindlichen elektronischen Teil (20), der enthält:
i. einen Chip;
ii. eine Primärantenne, die elektrisch mit dem Chip verbunden und elektromagnetisch mit der strahlenden Antenne (10) gekoppelt ist;
iii. wobei die Primärantenne eine Achse im Wesentlichen parallel zur Drehachse (11) der strahlenden Antenne (10) aufweist;
iv. wobei die Primärantenne eine Mittelebene (21) aufweist, die im Wesentlichen mit der Mittelebene (19) der strahlenden Antenne (10) überlappt; und
v. wobei die Primärantenne von einem Zylinder umgrenzt wird, dessen Drehachse parallel zur Achse der Primärantenne und dessen Durchmesser größer als das oder gleich dem Drittel des Innendurchmessers der gegenüber der Primärantenne befindlichen strahlenden Antenne (10) ist;
**dadurch gekennzeichnet, dass** für eine erste Zone (101, 101a, 101b) der strahlenden Antenne (10), in der die strahlende Antenne (10) sich nicht gegenüber dem elektronischen Teil (20) befindet, das Verhältnis zwischen der Gewindesteigung (P1) und dem Wicklungsdurchmesser (D1) für mindestens eine Schlaufe der Schraubenfeder größer als 0,8 ist.

2. Radiofrequenz-Transponder (1) nach Anspruch 1, wobei das Verhältnis zwischen der Gewindesteigung (P1) und dem Wicklungsdurchmesser (D1) jeder Schlaufe der Schraubenfeder in der ersten Zone (101, 101a, 101b) der strahlenden Antenne (10) niedriger als 3 ist.

3. Radiofrequenz-Transponder (1) nach einem der vorhergehenden Ansprüche, wobei die zwei letzten Schlaufen in der ersten Zone (101, 101a, 101b) der strahlenden Antenne (10), die sich bezüglich des elektronischen Teils (20) axial am weitesten außen befindet, über mindestens eine Umdrehung aneinander liegen.

4. Radiofrequenz-Transponder (1) nach einem der vorhergehenden Ansprüche, wobei, da die Primärantenne mit den Anschlüssen einer den Chip enthaltenden Elektronikkarte verbunden ist, die elektrische Impedanz der Primärantenne an die elektrische Impedanz der Elektronikkarte angepasst ist.

5. Radiofrequenz-Transponder (1) nach einem der vorhergehenden Ansprüche, wobei der Chip und mindestens ein Teil der Primärantenne in eine steife und elektrisch isolierende Masse (30) eingebettet sind.

6. Radiofrequenz-Transponder nach dem vorhergehenden Anspruch, wobei der mindestens eine Teil der Primärantenne, der nicht in die steife Masse eingebettet ist, mit einem elektrisch isolierenden Material beschichtet ist.

7. Radiofrequenz-Transponder (1) nach den vorhergehenden Ansprüchen, wobei für eine zweite Zone (102) der strahlenden Antenne (10), in der die strahlende Antenne (10) sich gegenüber dem elektronischen Teil (20) befindet, das Verhältnis zwischen der Gewindesteigung (P2) und dem Wicklungsdurchmesser (D2) für jede Schlaufe der Schraubenfeder geringer als oder gleich 0,8 ist.

8. Radiofrequenz-Transponder (1) nach einem der vorhergehenden Ansprüche, wobei die Geometrie des elektronischen Teils des Radiofrequenz-Transponders von einem Zylinder umgrenzt wird, dessen Durchmesser geringer als der oder gleich dem Innendurchmesser (13) der Antenne (10) ist, und dessen Drehachse parallel zur Drehachse (11) der strahlenden Antenne (10) ist.

9. Radiofrequenz-Transponder (1) nach einem der vorhergehenden Ansprüche, wobei die Radiofrequenz-Kommunikation mit dem Lesegerät mit Radiofrequenz-Abstrahlung im UHF-Band erfolgt.

10. Radiofrequenz-Transponder (1) nach dem vorhergehenden Anspruch, wobei die Radiofrequenz-Kommunikation mit dem Lesegerät mit Radiofrequenz-Abstrahlung in dem Band zwischen 860 und 960 MHz erfolgt.

11. Radiofrequenz-Transponder (1) nach dem vorhergehenden Anspruch, wobei die Länge (L0) der strahlenden Antenne (10) zwischen 30 und 50 Millimeter liegt.

12. Radiofrequenz-Transponder (1) nach einem der Ansprüche 9 bis 11, wobei der Wicklungsdurchmesser (D1) der strahlenden Antenne (10) in der ersten Zone (101, 101a, 101b) der strahlenden Antenne (10) zwischen 0,6 und 2,0 Millimeter liegt.

13. Radiofrequenz-Transponder (1) nach einem der Ansprüche 9 bis 12, wobei die Gewindesteigung (P1) mindestens einer Schlaufe der strahlenden Antenne (10) in der ersten Zone (101, 101a, 101b) der strahlenden Antenne (10) zwischen 1 und 4 Millimeter liegt.

14. Radiofrequenz-Transponder (1) nach den Ansprüchen 9 bis 13, wobei der Durchmesser des Drahts (12) der strahlenden Antenne (10) zwischen 0,05 und 0,25 Millimeter liegt.

15. Identifikationspatch (2), das einen Radiofrequenz-Transponder (1) nach einem der vorhergehenden Ansprüche enthält, wobei der Radiofrequenz-Transponder (1) in mindestens eine weiche und elektrisch isolierende Elastomermischung (3) eingebettet ist.

## Claims

1. Passive radiofrequency transponder (1) intended to be integrated into a mass made of elastomer blend, comprising:
- a radiating dipole antenna (10) consisting of a single-strand helical spring having an axis of revolution (11), a winding diameter (D1, D2), a helix pitch (PI, P2), a median plane (19) and a wire diameter defining an inside diameter (13) and an outside diameter (15) of the radiating antenna (10), the length (L0) of which is suitable for communication in a frequency band with a radiofrequency-transmitting reader, and
- an electronic portion (20) located inside the radiating antenna (10), comprising:
i. an electronic chip;
ii. a primary antenna electrically connected to the electronic chip and electromagnetically coupled to the radiating antenna (10);
iii. said primary antenna having an axis substantially parallel to the axis of revolution (11) of the radiating antenna (10);
iv. said primary antenna having a median plane (21) which is substantially superposed with the median plane (19) of the radiating antenna (10); and
v. said primary antenna being circumscribed by a cylinder the axis of revolution of which is parallel to the axis of the primary antenna and the diameter of which is larger than or equal to one third of the inside diameter of the radiating antenna (10), located plumb with the primary antenna;
**characterized in that,** in a first region (101, 101a, 101b) of the radiating antenna (10), in which region the radiating antenna (10) is not located plumb with the electronic portion (20), the ratio between the helix pitch (P1) and the winding diameter (D1) for at least one loop of the helical spring is higher than 0.8.

2. Radiofrequency transponder (1) according to claim 1, wherein the ratio between the helix pitch (P1) and the winding diameter (D1) of each loop of the helical spring in the first region (101, 101a, 101b) of the radiating antenna (10) is lower than 3.

3. Radiofrequency transponder (1) according to either of the preceding claims, wherein the two last loops of the first region (101, 101a, 101b) of the radiating antenna (10), i.e. the two loops that are located axially outermost with respect to the electronic portion (20), adjoin over at least one turn.

4. Radiofrequency transponder (1) according to one of the preceding claims, wherein the primary antenna being connected to the terminals of a circuit board comprising the electronic chip, the electrical impedance of the primary antenna is matched to the electrical impedance of the circuit board.

5. Radiofrequency transponder (1) according to one of the preceding claims, wherein the electronic chip and at least one portion of the primary antenna are embedded in a stiff and electrically insulating mass (30).

6. Radiofrequency transponder (1) according to the preceding claims, wherein the at least one portion of the primary antenna not embedded in the stiff mass is coated with an electrically insulating material.

7. Radiofrequency transponder (1) according to the preceding claims, wherein, in a second region (102) of the radiating antenna (10) in which the radiating antenna (10) is located plumb with the electronic portion (20), the ratio between the helix pitch (P2) and the winding diameter (D2) for each loop of the helical spring is lower than or equal to 0.8.

8. Radiofrequency transponder (1) according to one of the preceding claims, wherein the geometry of the electronic portion of the radiofrequency transponder is inscribed in a cylinder the diameter of which is smaller than or equal to the inside diameter (13) of the antenna (10) and the axis of revolution of which is parallel to the axis of revolution (11) of the radiating antenna (10).

9. Radiofrequency transponder (1) according to one of the preceding claims, wherein the radiofrequency communication with the radiofrequency-transmitting reader occurs in the UHF band.

10. Radiofrequency transponder (1) according to the preceding claim, wherein the radiofrequency communication with the radiofrequency-transmitting reader occurs in the band comprised between 860 and 960 MHz.

11. Radiofrequency transponder (1) according to the preceding claim, wherein the length (L0) of the radiating antenna (10) is comprised between 30 and 50 millimetres.

12. Radiofrequency transponder (1) according to one of Claims 9 to 11, wherein the winding diameter (D1) of the radiating antenna (10) in the first region (101, 101a, 101b) of the radiating antenna (10) is comprised between 0.6 and 2.0 millimetres.

13. Radiofrequency transponder (1) according to one of Claims 9 to 12, wherein the helix pitch (P1) of at least one loop of the radiating antenna (10) in the first region (101, 101a, 101b) of the radiating antenna (10) is comprised between 1 and 4 millimetres.

14. Radiofrequency transponder (1) according to Claims 9 to 13, wherein the diameter of the wire (12) of the radiating antenna (10) is comprised between 0.05 and 0.25 millimetres.

15. Identification tag (2) comprising a radiofrequency transponder (1) according to any one of the preceding claims, wherein the radiofrequency transponder (1) is embedded in at least one supple and electrically insulating elastomer blend (3).
